# EUROPEAN PATENT APPLICATION

(11) **EP 3 951 166 A1**
(43) Date of publication of application: **09.02.2022**
(21) Application number: 20783983.8
(22) Date of filing: 24.03.2020
(51) Int. Cl.: F03D 13/25, B63B 75/00, B63B 35/00

(54) **FLOATING STRUCTURE, FLOATING WIND-POWERED ELECTRICITY GENERATING DEVICE, AND METHOD FOR MANUFACTURING FLOATING STRUCTURE**

(30) Priority: 29.03.2019 JP 2019065666
(71) Applicant: Japan Marine United Corporation, Yokohama-City, Kanagawa 220-0012 (JP)
(72) Inventor: YAMAGUCHI, Takanori, Yokohama-City Kanagawa 220-0012 (JP); KITAKOJI, Yuka, Yokohama-City Kanagawa 220-0012 (JP); AWASHIMA, Yuji, Yokohama-City Kanagawa 220-0012 (JP); TSUNOO, Kazuhiko, Yokohama-City Kanagawa 220-0012 (JP); YOSHIMOTO, Haruki, Yokohama-City Kanagawa 220-0012 (JP)
(74) Representative: Banzer, Hans-Jörg
(86) International application number: PCT/JP2020/012849
(87) International publication number: WO 2020/203435

(57) **Abstract**

Provided are a floating structure, a floating type wind power generator, and a method of manufacturing the floating structure, wherein a wind turbine can be installed in a replaceable manner even if the wind turbine is enlarged. A floating wind power generator 1 according to this embodiment includes a floating structure 4 having buoyancy allowing for installation of a first wind turbine 2 that is rotationally driven by wind to generate power or a second wind turbine 3 that has an output larger than an output of the first wind turbine 2 to be mounted and is likely to be mounted in a future. In this floating wind power generator 1, the floating structure 4 is designed and manufactured by calculating required buoyancy based on the total weight of the second wind turbine 3 having a larger output than the first wind turbine 2 to be mounted so that it is unnecessary to manufacture a new floating structure even when the wind turbine is enlarged.

## Description

### Technical Field

The present invention relates to a floating structure, a floating type wind power generator, and a method of manufacturing a floating structure. The present invention relates more particularly to a floating structure adaptable to an increase in the size of a wind turbine in a future, a floating type wind power generator, and a method of manufacturing the floating structure.

### Background Art

In the field of floating type wind power generators, the output (power generation capacity) of a wind turbine is determined; the wind turbine is designed in detail; the total weight of an upper structure (the wind turbine and its auxiliary facilities) arranged on the floating structure is then calculated, floating structures are usually designed based on a total weight.

For example, the purpose of the invention described in Patent Literature 1 is to provide a method of designing a floating type wind power generator that is capable of accurately estimate the influence of repeated load caused by wind and waves to be reflected to the design for fatigue strength degree. Here, paragraph 0020 recites that "The floating body 1 is designed to generate buoyancy greater than the total weight of the floating body type wind power generator 10a, so that the entire floating body type wind power generator 10a can float on the water surface W".

### Citation List

### Patent Literature

Patent Literature 1: JP 2005-240785 A

### Summary of Invention

### Technical Problem

As described above, the floating structures used in the floating type wind power generators are each designed based on the total weight of an upper structure, and are designed to generate minimum required buoyancy including a safety factor from the viewpoint of reducing the cost.

Meanwhile, in recent years, the output (power generation capacity) of a wind turbine has tended to increase. Thus, it is necessary to redesign a floating structure with an increase in the size of the wind turbine to manufacture a floating structure that can withstand a larger wind turbine. Thus, the manufacturing cost of the floating wind power generation facility unfortunately increases with increasing size of the wind turbine. In particular, in the field of floating type wind power generators, the cost should be further reduced from the viewpoint of profitability of electric power generation business.

The present invention has been made in view of such problems. The purpose of the invention is to provide a floating structure, a floating type wind power generator, and a method of manufacturing the floating structure, wherein a wind turbine can be mounted in a replaceable manner even when the wind turbine is enlarged.

### Solution to Problem

An aspect of the invention provides a floating structure including a structure having buoyancy allowing for installation of a second wind turbine having an output larger than an output of a first wind turbine to be mounted.

Another aspect of the invention provides a floating type wind power generator including a floating structure having buoyancy allowing for installation of a second wind turbine having an output larger than an output of a first wind turbine to be mounted.

The floating structure may include a base configured to support the first wind turbine or the second wind turbine in a replaceable manner. In addition, the floating structure may include an attachment arranged between the base and the first wind turbine or the second wind turbine. Also, the floating structure may have a lifetime longer than a lifetime of at least the first wind turbine.

Still another aspect of the invention provides a method of manufacturing a floating structure, including: a first step of determining an output of a first wind turbine to be mounted; a second step of determining a maximum output of a second wind turbine that has an output larger than the output of the first wind turbine and is likely to be mounted in a future; a third step of calculating buoyancy of a floating structure allowing for installation of the second wind turbine; a fourth step of designing the floating structure based on the buoyancy.

### Advantageous Effects of Invention

In the above-described floating structure, floating type wind power generator, and method of manufacturing the floating structure according to the invention, the floating structure has buoyancy allowing for installation of a second wind turbine having an output larger than an output of a first wind turbine to be mounted. Thus, even if the wind turbine is enlarged in a future, it is possible to use the existing floating structure without newly manufacturing a floating structure to install an enlarged wind turbine in a replaceable manner.

Further, the invention can make longer the useful life of the floating structure. Furthermore, the lifetime of the floating structure is made to correspond to the number of years of use in advance, so that the operation cost (depreciation expense) required for each year can be reduced. This makes it possible to simply improve the power generation revenue.

### Brief Description of Drawings

Fig. 1 is an overall configuration diagram illustrating a floating type wind power generator according to an embodiment of the invention.
Fig. 2 is an enlarged view showing a connector between a floating structure and a first wind turbine. (A) is an exploded view of components, and (B) is a cross-sectional top view.
Fig. 3 is a flowchart illustrating a method of manufacturing a floating structure according to an embodiment of the invention.
Fig. 4 is cross-sectional top views each showing a connector between a floating structure and a second wind turbine. (A) represents a first example and (B) represents a second example.
Fig. 5 is views each showing a modification example of a connector between a floating structure and a wind turbine. (A) shows a connector for a first wind turbine, and (B) shows a connector for a second wind turbine.

### Description of Embodiments

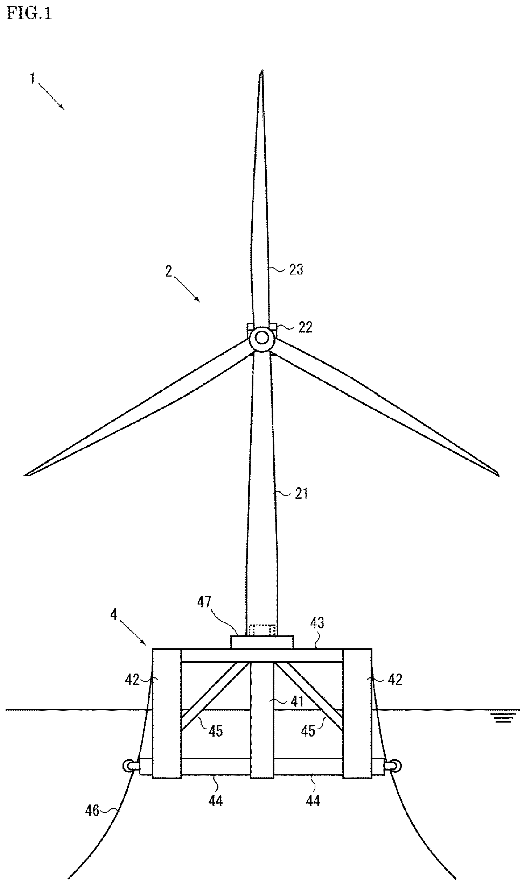

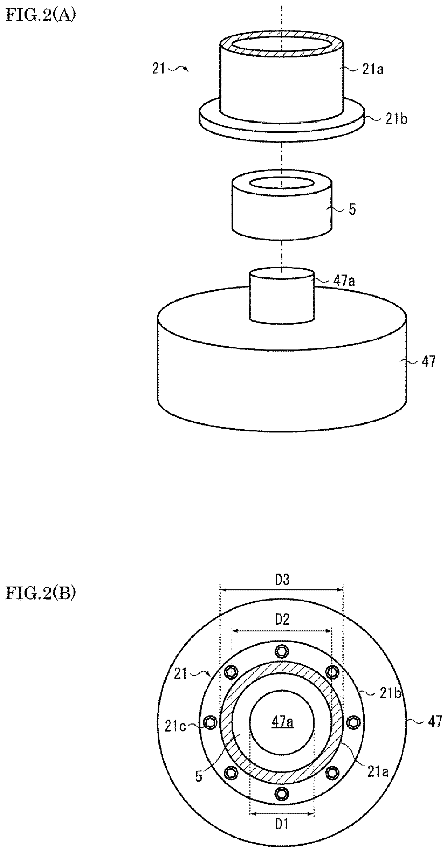

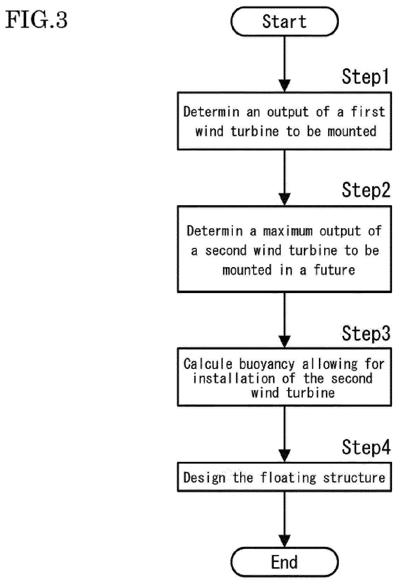

Hereinafter, embodiments of the invention will be described with reference to Figs. 1 to 5(B). Here, Fig. 1 is an overall configuration diagram illustrating a floating type wind power generator according to an embodiment of the invention. Fig. 2 is an enlarged view showing a connector between a floating structure and a first wind turbine. (A) is an exploded view of components, and (B) is a cross-sectional top view. Fig. 3 is a flowchart illustrating a method of manufacturing a floating structure according to an embodiment of the invention.

As illustrated in Fig. 1, a floating type wind power generator 1 according to an embodiment of the invention includes a floating structure 4 having buoyancy allowing for installation of a first wind turbine 2 that is rotationally driven by wind to generate power or a second wind turbine 3 that has an output larger than an output of the first wind turbine 2 to be mounted and is likely to be mounted in a future.

The first wind turbine 2, an upper structure of the floating structure 4, includes, for example, a tower 21, a nacelle 22, and blades 23. The tower 21 is a support column configured to support the nacelle 22 and the blades 23, and is connected to a base 47 of the floating structure 4. The nacelle 22 has a generator therein and generates electric power by rotation of the blades 23. The blades 23 are rotatably supported by the nacelle 22 and are configured to be rotationally driven by wind power.

The floating structure 4 is, for example, a semi-sub (semi-submersible) type floating body. Note that the floating structure 4 is not limited to a semi-sub type floating body, and may be another type of floating body, such as a barge type, a spar type, or a tension-moored platform type.

The semi-sub type floating structure 4 includes: for example, a center column 41 arranged at the center of the floating structure 4; a plurality of (e.g., three) side columns 42 arranged around an outer periphery of the center column 41; a platform 43 arranged at an upper part of the center column 41 and the side columns 42; lower braces 44 for connecting the center column 41 and the side columns 42; oblique braces 45 for connecting the platform 43 and the side columns 42; and mooring ropes 46 for mooring the floating structure 4 to the sea floor. Note that the structure of such a semi-sub type floating body is merely an example, and is not limited to the illustrated structure.

The center column 41 and the side columns 42 constitute what is called a ballast tank, and are configured to be capable of injecting and discharging sea water into and from an internal cavity as necessary. The center area of the platform 43 has the base 47 on which the first wind turbine 2 is installed. The lower braces 44 and the oblique braces 45 are members that maintain the strength of the floating structure 4.

For example, as illustrated in Fig. 2(A), the base 47 is a cylindrical or disk-shaped protrusion formed on the platform 43. A support shaft 47a that can be inserted into the tower 21 is erected at the center of the base 47. Although not illustrated, a plurality of bolt holes may be formed substantially radially around the support shaft 47a on the upper surface of the base 47. The bolt holes may be formed in a flange portion formed circumferentially on the upper surface of the base 47. Note that although not illustrated, the base 47 may have a shape (e.g., a prismatic shape) other than a cylindrical shape or a disk shape.

The tower 21 includes a cylindrical annular portion 21a formed over a certain range (height) at a lower end part and a flange portion 21b formed around an edge of the lower end part. Although not illustrated, the flange portion 21b has a plurality of openings through which bolts 21c (see Fig. 2(B)) can be screwed into bolt holes formed in the base 47. The outer shape and the openings of the flange portion 21b are formed to match the positions of the bolt holes arranged on the base 47.

Here, as illustrated in Fig. 2(B), when the diameter of the support shaft 47a is defined as D1, the inner diameter of the annular portion 21a is defined as D2, and the outer diameter of the annular portion 21a is defined as D3, the relationship of D1 < D2 < D3 is satisfied. Further, the diameter D1 of the support shaft 47a is set to be sufficiently smaller than the inner diameter D2 of the annular portion 21a while maintaining a certain strength so that the support shaft 47a can be inserted without being in contact with the annular portion 21a.

Accordingly, in the case of arranging the tower 21 on the base 47, a gap occurs between the support shaft 47a and the annular portion 21a. Then, the floating type wind power generator 1 according to this embodiment includes an attachment 5 fit to the outer periphery of the support shaft 47a and fit to the inner periphery of the annular portion 21a.

As shown in Figs. 2(A) and 2(B), the attachment 5 is a cylindrical component having an inner diameter of D1 (exactly, a diameter slightly larger than D1) and an outer diameter of D2 (exactly, a diameter slightly smaller than D2). Since the attachment 5 is arranged between the annular portion 21a of the tower 21 and the support shaft 47a of the base 47, it can be said that the attachment 5 is arranged between the first wind turbine 2 and the base 47.

The buoyancy of the floating structure 4 described above has conventionally been designed based on the total weight of the first wind turbine 2 to be mounted. Here, the lifetime of the floating structure 4 is generally longer than the lifetime of the first wind turbine 2.

Thus, the life (lifetime) of the floating type wind power generator 1 should be determined by the lifetime of the first wind turbine 2. In addition, only the first wind turbine 2 may be replaced with a new wind turbine. Even in this case, the buoyancy of the floating structure 4 has been determined based on the total weight of the first wind turbine 2. Because of this, a wind turbine larger than the first wind turbine 2 cannot be mounted on the floating structure 4.

On the other hand, in recent years, the output (power generation capacity) required for the floating type wind power generator has tended to increase year by year. Thus, 5 to 10 years after installation of the floating type wind power generator, a larger wind turbine is sought to be installed. As the wind turbine becomes larger, the total weight thereof also increases. As a result, in order to cope with an increase in the size of the wind turbine, it is necessary to newly manufacture a floating structure corresponding to the increase.

Then, in the floating type wind power generator 1 according to this embodiment, the floating structure 4 is designed and manufactured by calculating required buoyancy based on the total weight of the second wind turbine 3 having a larger output than the first wind turbine 2 to be mounted so that it is unnecessary to manufacture a new floating structure even if the wind turbine is enlarged.

That is, as shown in Fig. 3, the method of manufacturing the floating structure 4 according to this embodiment includes: a first step (Step 1) of determining the output of the first wind turbine 2 to be mounted; a second step (Step 2) of determining the output of the second wind turbine 3 that has an output larger than the output of the first wind turbine 2 and is likely to be mounted in a future; a third step (Step 3) of calculating buoyancy of the floating structure 4 allowing for installation of the second wind turbine 3; and a fourth step (Step 4) of designing the floating structure 4 based on the calculated buoyancy.

For example, if the output (power generation capacity) of the first wind turbine 2 to be mounted is 7.5 MW class, it is predicted that an output (power generation capacity) of 10 MW class is required after several years, and an output (power generation capacity) of 15 MW class or more is required after 5 to 10 years.

Assuming that the lifetime of the floating structure 4 is from 30 to 40 years, a wind turbine having an output (power generation capacity) of at least 15 MW class or more is simulated as the second wind turbine 3; the total weight of the wind turbine is calculated; and buoyancy required for mounting the second wind turbine 3 is calculated. In a case where the floating structure 4 is designed and manufactured on the basis of the calculated buoyancy, the initial cost at the time of mounting the first wind turbine 2 increases. However, the cost such as the removal work cost and the manufacturing cost required when the first wind turbine 2 is replaced with the enlarged second wind turbine 3 can be significantly reduced.

In addition, the lifetime of the first wind turbine 2 or the second wind turbine 3 may be, for example, 10 years. In this case, the lifetime of the floating structure 4 may be longer than the sum of the service lives of the first wind turbine 2 and the second wind turbine 3 (20 years). Further, it is difficult to accurately predict, at the time of mounting the first wind turbine 2, the lifetime of the second wind turbine 3 to be mounted in a future. Thus, the lifetime of the floating structure 4 may be longer than the lifetime of the first wind turbine 2, for example, by about 5 to 10 years. That is, the floating structure 4 is designed and manufactured according to specifications in which the lifetime is set to be longer than the lifetime of at least the first wind turbine 2.

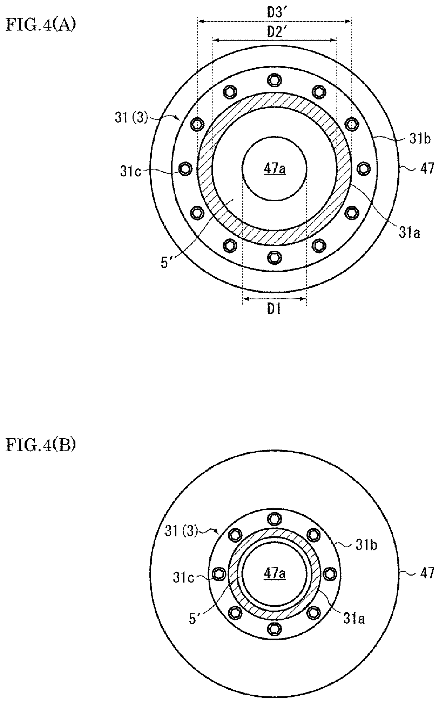

Here, Fig. 4 is cross-sectional top views each illustrating a connector between the floating structure and the second wind turbine. (A) represents a first example and (B) represents a second example. The second wind turbine 3 has an annular portion 31a and a flange portion 31b at the lower end of the tower 31. When the inner diameter of the annular portion 31a is defined as D2' and the outer diameter of the annular portion 31a is defined as D3', the relationship of D1 < < D2' < D3' is satisfied.

As shown in Fig. 4(A), an attachment 5' is a cylindrical component having an inner diameter of D1' (exactly a diameter slightly larger than D1') and an outer diameter of D2' (exactly a diameter slightly smaller than D2'). Since the attachment 5' is arranged between the annular portion 31a of the tower 31 and the support shaft 47a of the base 47, it can be said that the attachment 5' is arranged between the second wind turbine 3 and the base 47.

Meanwhile, when the first wind turbine 2 is replaced with the second wind turbine 3, the first wind turbine 2 is removed from the floating structure 4; the attachment 5 is removed; the new attachment 5' is installed on the base 47; and the second wind turbine 3 is then installed. Note that the tower 31 is connected via bolts 31c to the base 47. In addition, the replacement of the wind turbine is not limited to one time. The wind turbine may be replaced sequentially two or three times. In this way, the floating structure 4 may be used over a long period.

Generally speaking, the tower 31 also tends to become thicker as the wind turbine becomes larger. The thickness of the tower 31 may be thinner than the thickness of the tower 21 of the first wind turbine 2 depending on the technical advance at the time of installing the second wind turbine 3. This case may be dealt such that, for example, as illustrated in Fig. 4(B), the attachment 5' is formed in a thinner cylindrical shape.

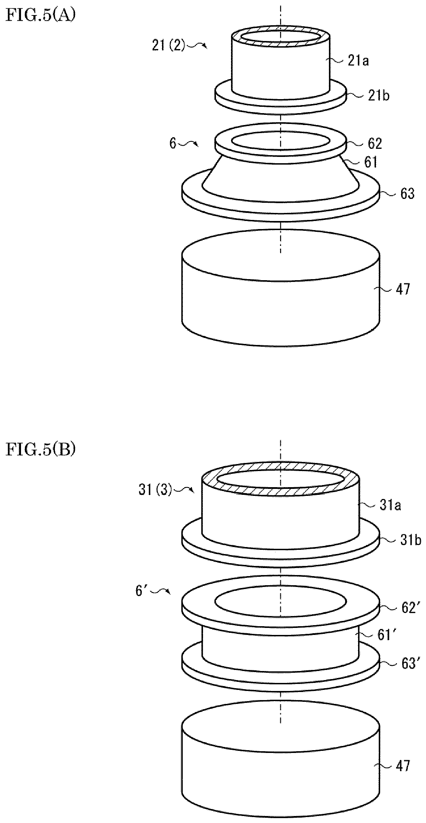

In the embodiments described above, each connector structure is configured such that the support shaft 47a is fit, via the attachment 5 or 5', to and inserted into the annular portion 21a or 31a. However, the connector structure is not limited to such a configuration. Here, Fig. 5 is views each showing a modification example of a connector between the floating structure and the wind turbine. (A) shows the connector of the first wind turbine, and (B) shows the connector of the second wind turbine.

In the modification examples shown in Fig. 5(A) and Fig. 5(B), the support shaft 47a is not formed on the base 47. The first wind turbine 2 is connected via an attachment 6 to the base 47, and the second wind turbine 3 is connected via an attachment 6' to the base 47.

The attachment 6 illustrated in Fig. 5(A) includes a trunk 61 having a truncated conical outer shape, a first flange portion 62 arranged at an upper end of the trunk 61 and bolted to the flange portion 21b, and a second flange portion 63 arranged at a lower end of the trunk 61 and bolted to the base 47. Openings formed in the flange portion 21b, the bolt holes formed in the base 47, and bolts by which each portion is connected are not depicted for convenience of description.

The attachment 6' shown in Fig. 5(B) includes a trunk 61' having a cylindrical outer shape, a first flange portion 62' arranged at an upper end of the trunk 61' and bolted to the flange portion 21b, and a second flange portion 63' arranged at a lower end of the trunk 61 and bolted to the base 47. Openings formed in the flange portion 31b, the bolt holes formed in the base 47, and bolts by which each portion is connected are not depicted for convenience of description.

As described above, it is possible to use the attachment 6 having a shape conforming to the lower end structure (the annular portion 21a and the flange portion 21b) of the tower 21 of the first wind turbine 2 and the attachment 6' having a shape conforming to the lower end structure (the annular portion 31a and the flange portion 31b) of the tower 31 of the second wind turbine 3. This makes it possible to install the first wind turbine 2 or the second wind turbine 3 on the base 47 of the floating structure 4.

According to the floating structure 4, the floating type wind power generator 1, and the method of manufacturing the floating structure 4 according to this embodiment described above, the floating structure 4 has buoyancy allowing for installation of the second wind turbine 3 having an output larger than the output of the first wind turbine 2 to be mounted. Thus, even if the wind turbine is enlarged in a future, it is possible to use the existing floating structure 4 without newly manufacturing a floating structure 4 to install the enlarged second wind turbine 3 in a replaceable manner.

Besides, the above embodiment makes it possible to extend the useful life of the floating structure 4. Then, the lifetime of the floating structure 4 is made to correspond to the number of years of use in advance. This can substantially reduce the operation cost (depreciation expense) required for each year. This makes it possible to simply improve the power generation revenue.

The invention is not limited to the above-described embodiments, and various modifications are allowed without departing from the spirit of the invention.

### Reference Signs List

- 1: Floating wind power generator
- 2: First wind turbine
- 3: Second wind turbine
- 4: Floating structure
- 5, 5', 6, 6': Attachment
- 21, 31: Tower
- 21a, 31a: Annular portion
- 21b, 31b: Flange portion
- 21c, 31c: Bolt
- 22: Nacelle
- 23: Blade
- 41: Center column
- 42: Side column
- 43: Platform
- 44: Lower brace
- 45: Oblique brace
- 46: Mooring rope
- 47: Base
- 47a: Support shaft
- 61, 61': Trunk
- 62, 62': First flange portion
- 63, 63': Second flange portion

## Claims

1. A floating structure comprising a structure having buoyancy allowing for installation of a second wind turbine having an output larger than an output of a first wind turbine to be mounted.

2. The floating structure according to claim 1, further comprising a base configured to support the first wind turbine or the second wind turbine in a replaceable manner.

3. The floating structure according to claim 2, further comprising an attachment arranged between the base and the first wind turbine or the second wind turbine.

4. The floating structure according to claim 1, wherein the floating structure has a lifetime longer than a lifetime of at least the first wind turbine.

5. A floating type wind power generator comprising a floating structure having buoyancy allowing for installation of a second wind turbine having an output larger than an output of a first wind turbine to be mounted.

6. The floating type wind power generator according to claim 5, wherein the floating structure further comprises a base configured to support the first wind turbine or the second wind turbine in a replaceable manner.

7. The floating type wind power generator according to claim 6, wherein the floating structure further comprises an attachment arranged between the base and the first wind turbine or the second wind turbine.

8. The floating type wind power generator according to claim 5, wherein the floating structure has a lifetime longer than a lifetime of at least the first wind turbine.

9. A method of manufacturing a floating structure, comprising:
a first step of determining an output of a first wind turbine to be mounted;
a second step of determining a maximum output of a second wind turbine that has an output larger than the output of the first wind turbine and is likely to be mounted in a future;
a third step of calculating buoyancy of a floating structure allowing for installation of the second wind turbine; and
a fourth step of designing the floating structure based on the buoyancy.
